# EUROPÄISCHE PATENTANMELDUNG

(11) **EP 4 233 514 A1**
(43) Veröffentlichungstag der Anmeldung: **30.08.2023**
(21) Anmeldenummer: 23158034.1
(22) Anmeldetag: 22.02.2023
(51) Int. Cl.: A01D 17/10, B65G 15/52, B65G 17/06

(54) **FÖRDERBAND FÜR EINE LANDWIRTSCHAFTLICHE ARBEITSMASCHINE SOWIE LANDWIRTSCHAFTLICHE ARBEITSMASCHINE, INSBESONDERE ERNTEMASCHINE**

(30) Priorität: 25.02.2022 DE 202022101090 U
(71) Anmelder: Ricon GmbH & Co. KG, 49401 Damme (DE)
(72) Erfinder: LINGENS, Felix, 49565 Bramsche (DE); OEVERMANN, Hartwig, 49434 Neuenkirchen-Vörden (DE)
(74) Vertreter: Wischmeyer, André

(57) **Zusammenfassung**

Die Erfindung betrifft ein Förderband (6) für eine landwirtschaftliche Arbeitsmaschine, mit zumindest zwei Endlosträgern (20), die über mehrere quer zur Längserstreckung des Förderbands und der im Betrieb vorhandenen Förderrichtung verlaufende Querelemente (28) miteinander verbunden und auf Abstand zueinander gehalten sind, wobei die Querelemente an ihren entgegengesetzten Enden jeweils an unterschiedlichen Endlosträgern befestigt sind, sowie mit wenigstens einem flexiblen Flächenelement (18), dessen Oberseite zum Transport von landwirtschaftlichem Gut vorgesehen ist und das in einer Draufsicht auf das Förderband eine Fläche zwischen den Endlosträgern überdeckt, wobei das Flächenelement in Förderrichtung betrachtet an seinen beiden entgegengesetzten seitlichen Enden jeweils direkt mit unterschiedlichen Endlosträgern verbunden ist. Weiterhin betrifft die Erfindung eine landwirtschaftliche Arbeitsmaschine, insbesondere Erntemaschine.

## Beschreibung

Die vorliegende Erfindung betrifft ein Förderband für eine landwirtschaftliche Arbeitsmaschine, insbesondere eine Erntemaschine, mit zumindest zwei Endlosträgern, die über mehrere quer zur Längserstreckung des Förderbands und der im Betrieb vorhandenen Förderrichtung verlaufende Querelemente miteinander verbunden und auf Abstand zueinander gehalten sind, wobei die Querelemente an ihren entgegengesetzten Enden jeweils an unterschiedlichen Endlosträgern befestigt sind. Das Förderband weist weiterhin wenigstens ein flexibles Flächenelement auf, dessen Oberseite zum Transport von landwirtschaftlichem Gut vorgesehen ist, und das in einer Draufsicht auf das Förderband eine Fläche zwischen den Endlosträgern überdeckt. Des Weiteren betrifft die Erfindung eine landwirtschaftliche Arbeitsmaschine mit einem entsprechenden Förderband. Die landwirtschaftliche Arbeitsmaschine kann beispielsweise als angehängte oder selbstfahrende Erntemaschine ausgebildet sein.

Als landwirtschaftliches Gut sind beispielsweise Hackfrüchte und/oder bei deren Ernte aufgenommene Neben- bzw. Störprodukte, beispielsweise in Form von Kluten oder Steinen, zu verstehen. Unter einem Flächenelement wird ein solches Förderbandteil verstanden, das sich über eine in einer Draufsicht zwischen den Endlosträgern vorhandenen Fläche erstreckt und dessen Erstreckung in Länge und Breite um ein Vielfaches größer ist als dessen Erstreckung in Richtung der Draufsicht.

In der DE 201 16 382 U1 ist ein Förderband offenbart, bei dem das Flächenelement durch die Querelemente getragen wird, wobei die Querelemente in von dem Flächenelement ausgebildeten und/oder an diesem befestigten Aufnahmekanälen angeordnet sind.

Um ein Durchhängen des Flächenelements während des Transportes landwirtschaftlichen Gutes zu vermeiden, sind eine Vielzahl von Querstäben erforderlich. Entsprechend ist die Anbringung und der Austausch des Flächenelements durch die hiermit einhergehende notwendige Loslösung der Querstäbe vom Endlosträger aufwendig. Darüber hinaus verschmutzen die Aufnahmekanäle leicht, was zu erhöhtem Verschleiß führt.

Es ist Aufgabe der vorliegenden Erfindung, ein Förderband hinsichtlich der vorbeschriebenen Nachteile zu verbessern.

Die Aufgabe wird gelöst durch einen Gegenstand gemäß Anspruch 1 sowie durch einen Gegenstand gemäß Anspruch 13. Vorteilhafte Ausgestaltungen der Erfindung sind den Unteransprüchen sowie der nachfolgenden Beschreibung zu entnehmen.

Erfindungsgemäß ist ein Förderband mit einem Flächenelement versehen, das in Förderrichtung betrachtet an seinen beiden entgegengesetzten seitlichen Enden jeweils direkt mit den unterschiedlichen Endlosträgern verbunden ist. Auf die verschmutzungsanfälligen Aufnahmekanäle des Flächenelements für etwaige Querelemente kann verzichtet werden. Gleichzeitig kann je nach Ausführungsbeispiel die Anzahl der Querelemente, insbesondere in Form von Querstäben verringert werden. Diese dienen lediglich noch zum Einhalten des Abstands der Endlosträger. Bei einer Anordnung unterhalb des Flächenelements können sie darüber hinaus partiell das Flächenelement von unten stützen, wenn aufgrund der Gewichtskraft des transportierten Guts dieses das Flächenelement nach unten drückt.

Durch die unmittelbare Verbindung zum Endlosträger ist das zumindest eine Flächenelemente besser festgelegt, so dass Zugkräfte vom Endlosträger besser auf das Flächenelement übertragen werden können. Insbesondere ist das Flächenelement im Bereich zwischen den Endlosträgern ohne Ausnehmungen, Löcher oder dergleichen ausgebildet, so dass sich vom Endlosträger ausgebildete besonders gleichmäßig verteilen.

Da das Flächenelement seitlich am Endlosträger festgelegt ist, kann anders als im vorbezeichneten Stand der Technik weniger Schmutz oder Fremdkörper in Richtung etwaiger Antriebsorgane des Endlosträgers bzw. des Förderbands von diesem gelangen. Eine Arbeitsmaschine, in der das erfindungsgemäße Förderband eingesetzt wird, verschmutzt somit weniger stark.

Eine Reduzierung der Anzahl der erforderlichen Querelemente im Band ermöglicht eine Gewichtsreduzierung, da vorzugsweise nur noch alle 15 bis 25 cm ein Querstab zu verwenden ist. Weiterhin kann ein Austausch des Flächenelements unabhängig von einem Lösen der Querstäbe bzw. Querelemente erfolgen, was eine partielle Erneuerung des Förderbandes erleichtert.

Als seitliche Enden des Flächenelements werden vorliegend insbesondere die in Förderrichtung betrachtet jeweils linken und rechten Ränder oder Randbereiche, insbesondere die letzten 5 cm der linken und rechten Enden des Flächenelements, betrachtet. Es handelt sich somit nicht allein um die Stirnseite sondern um einen endseitigen linken bzw. rechten Bereich der vordefinierten Breite, die zum Festlegen auf dem jeweiligen Endlosträger Verwendung findet. Die Längsrichtung entspricht im Allgemeinen der Transport- bzw. Förderrichtung sowie teilweise der Umlaufrichtung des Förderbandes.

Die Querelemente sind insbesondere in Form von quer zur Förderrichtung verlaufenden Stäben ausgebildet und verlaufen in Richtung ihrer maximalen Längserstreckung insbesondere in einem 90°-Winkel zum Endlosträger, betrachtet in einer Draufsicht auf einen oberen Teil eines umlaufenden Förderbandes bzw. betrachtet in einer Draufsicht auf ein geöffnetes und abgewickeltes bzw. flach gelegtes Förderband.

Das Flächenelement ist vollständig umlaufend ausgebildet ungeachtet einer insbesondere am Verbindungsbereich etwaig vorhandenen Reinigungsklappe, die bei einem Umlauf des Bandes zu einem Öffnen desselben und einer Reinigung des Förderbandes führen kann.

Als flexibles Flächenelement wird ein Flächenelement bezeichnet, welches eine Biegung der Endlosträger aufgrund der Elastizität des Materials des Flächenelements und nicht durch etwaig im Flächenelement angeordnete Gelenke mitmacht. Insbesondere kann das Material des Flächenelements zumindest im Wesentlichen aus PU, Polyester, PVC sowie etwaigen Gewebeschichten bestehen. Es kann sich somit nicht nur um ein ein- sondern auch um ein mehrschichtiges Material mit einer eingearbeiteten Gewebelage handeln, wobei eine solche Gewebelage auch dann als Schicht bezeichnet wird, wenn sie eingegossen ist. Insbesondere weist das Flächenelement einen Zerreißwiderstand zwischen 6000 N und 10000 N auf.

Während das Flächenelement bei einer Ausführung der Erfindung einstückig mit den Endlosträgern ausgebildet sein kann, ist es gemäß einer weiteren vorteilhaften Ausgestaltung der Erfindung direkt an den Endlosträgern befestigt, beispielsweise durch Kleben, Vulkanisieren und/oder Nieten. Die Festlegung an den Endlosträgern erfolgt hierbei unter Verzicht auf eine zumindest teilweise, insbesondere vollständige Festlegung an den Querelementen. Insbesondere sind die Querelemente in Form von vorzugsweise Rundstäben mit abgeflachten Enden mit Senkniete am Endlosträger befestigt, während die oder der Flächenträger mit einer Reihe von Popp- oder Blindnieten befestigt ist. Diese können leicht abgetrennt werden, was einen einfachen Austausch des Flächenträgers bzw. -elements ermöglicht.

In Längsrichtung betrachtet ist das Flächenelement vorzugsweise breiter als der Zwischenraum zwischen den Endlosträgern, so dass der Bereich zwischen Ober- und Untertrum bzw. die im Falle eines Betriebs in einer Arbeitsmaschine dort vorhandenen Maschinenelemente weniger verschmutzen.

Vorzugsweise ist in Längsrichtung betrachtet das Flächenelement weniger breit als die Gesamtbreite des Förderbandes, so dass keine überstehenden Bereiche, die den Betrieb des Förderbandes stören würden, entstehen.

Vorteilhafterweise ist das Flächenelement eines erfindungsgemäßen Förderbands in Längsrichtung betrachtet an einem jeweiligen insbesondere stegfreien Absatz eines Endlosträgers festgelegt. Der Absatz, auch als Schulter zu bezeichnen, ist auf der zum Zwischenraum hin gerichteten Seite eines jeweiligen Endlosträgers und bildet in Abgrenzung zu den bekannten Endlosträgern eine vorzugsweise zumindest im Wesentlichen, insbesondere komplett plane Anlagefläche, auf der das Flächenelement oberflächenbündig aufgelegt werden kann und somit einen einerseits guten und verschmutzungsunanfälligen Übergang zum Endlosträger ausbildet, andererseits dort einen gut zu handhabenden Befestigungsbereich darstellt, an dem das Flächenelement festgelegt werden kann. Insbesondere ist der Absatz für bei landwirtschaftlichen Arbeitsmaschinen verwendbaren Förderbändern zwischen 15 und 25 mm breit, betrachtet in Förderrichtung bzw. Längsrichtung.

Eine besonders einfache Herstellung der Erfindung ergibt sich dadurch, dass der Absatz durch nachträgliches Entfernen von Teilen der Stege eines herkömmlichen Endlosträgers gebildet wird. Diese werden üblicherweise in großen Stückzahlen gefertigt, so dass in Summe eine nachträgliche Bearbeitung effizienter und schneller sein kann. Beispielsweise erfolgt diese nachträgliche Bearbeitung durch Abscheren von Teilen der auf der Oberseite eines Endlosträgers vorhandenen Stege durch eine entsprechende Schervorrichtung. Hierbei kann zur Ausbildung eines entsprechend flacheren Absatzes nach dem Entfernen etwaiger Stege ein weiterer Teil des Deckmaterials der Deckschicht auf der Oberseite oder auf der Unterseite eines Endlosträgers abgetragen werden, so dass das Flächenelement dann oberflächenbündig mit dem Rest des Stegs ausgebildet ist, was die Verschmutzungsanfälligkeit weiter reduziert und insbesondere eine gute Integration in bereits vorhandene und auf bekannte Endlosträger ausgelegte landwirtschaftliche Maschinen ermöglicht.

Der Absatz verläuft insbesondere komplett umlaufend auf dem Förderband bzw., wenn dieses abgewickelt ist, komplett entlang der Stege auf der Oberseite eines jeweiligen Endlosträgers. Die Oberseite des Endlosträgers ist diejenige Seite, die auf derselben Seite liegt wie das im Normalfall zu transportierende Gut.

Insbesondere sind eine Anzahl von Popp- oder Blindniete in Längsrichtung hintereinander auf einem jeweiligen Absatz angeordnet, um das Flächenelement dort festzulegen.

Über die Beabstandung der Endlosträger mittels der Querelemente und die in Längsrichtung erfolgende Befestigung des Flächenelements an den Endlosträgern erfolgt eine definierte Aufspannung des Flächenelements, so dass dieses optimal dem Verlauf eines Endlosträgers folgen kann.

Vorzugsweise ist das Flächenelement in Längsrichtung und im Querschnitt betrachtet weniger als 1 cm von der neutralen Faser des Endlosträgers beabstandet, so dass sich möglichst wenig Relativbewegungen des Flächenelements zum Endlosträger ergeben und die hiermit einhergehenden Belastungen in den Umlenkungbereichen des Förderbandes möglichst gering bleiben.

Dies wird insbesondere dadurch erreicht, dass das Tuch im Bereich des Endlosträgers auf dem Absatz festgelegt wird, dessen Deckschicht oberhalb einer insbesondere die neutrale Faser darstellende Gewebeeinlage reduziert ist im Vergleich zur benachbarten und Stege aufweisenden Deckschicht des Endlosträgers.

Vorzugsweise ist das Querelement als Stab ähnlich einem herkömmlichen Siebstab mit insbesondere abgeflachten Enden ausgebildet. Ein solches Querelement kann insbesondere zur Vermeidung eines Abriebs des Flächenelements mit einer Beschichtung versehen sein, dessen Oberfläche einen geringeren Reibungskoeffizienten als das Material des Flächenelements aufweist.

Vorzugsweise ist das Flächenelement auf einer Oberseite des jeweiligen Endlosträgers festgelegt. So wirkt ein etwaig vorhandener Absatz des jeweiligen Endlosträgers zusätzlich zum Abfangen der auf das Flächenelement einwirkenden Kräfte, wenn im Obertrum des Endlosträgers Material transportiert wird.

Um eine möglichst flächenbündige Anlage des Flächenelements auf der Oberseite des Endlosträgers zu gewährleisten und gleichzeitig noch eine Unterstützungswirkung der Querelemente zu erzeugen, sind diese insbesondere in Form von Querstäben auf einer Unterseite des jeweiligen Endlosträgers festgelegt. Hierbei erfolgt die Festlegung insbesondere unmittelbar am Endlosträger und unter Verzicht auf eine gleichzeitige Festlegung des Flächenelements mit den das Querelement festlegenden Befestigungselementen.

Insbesondere liegen Querelemente und Flächenelement so dicht aneinander an, dass im Obertrum das Flächenelement auf den Querelementen aufliegt und so eine vom Erntegut auf das Flächenelement einwirkende Gewichtskraft von den Querstäben aufgenommen wird. In einem solchen Fall ist das Flächenelement dann mit den jeweils durch die Querstäbe ausgebildeten Förderabschnitten auf allen vier Seiten betrachtet in Draufsicht unterstützt.

Das Flächenelement kann insbesondere als ein- oder mehrschichtiges Tuch ausgebildet sein, wobei insbesondere eine Schicht durch eine Gewebelage ausgebildet ist. Es versteht sich, dass bei einem Eingießen eines Gewebes eine Schichtgrenze zwischen einem Deckmaterial und einem Gewebematerial fließend ist. Bei einem Mehrschichtaufbau können beispielsweise durch einen Innenaufbau bzw. eine Innenschicht aus Polyester und ein oder zwei Deckschichten aus PVC definiertere Übergänge geschaffen werden.

Die durch das Flächenelement ausgebildete Förderfläche ist in Umlaufrichtung vorzugsweise geschlossen. Gleiches gilt für die Endlosträger, die typischerweise aus in einem Schlossbereich miteinander verbundenen Endlosträgerstreifen hergestellt sind. Ungeachtet einer ansonsten in Umlaufrichtung durch das Flächenelement ausgebildeten, geschlossenen Förderfläche kann insbesondere in solchen Übergangsbereichen zwischen den Enden des Endlosträgermaterials eine Reinigungsklappe die von den Flächenelementen ausgebildete Förderfläche unterbrechen.

Die Reinigungsklappe selbst kann einen plattenähnlichen, flächigen Aufbau, der sich in die weitere Förderfläche integriert, aufweisen. Die Reinigungsklappe kann beispielsweise eine im Obertrum schwerkraftbedingt aufliegende, eine geschlossene Förderfläche mit dem Rest des Flächenelements ausbildende Oberfläche aufweisen, während sie im Untertrum dann schwerkraftbedingt aufklappt und so einen Durchgang für im Zwischenbereich zwischen Obertrum und Untertrum angesammelten Gutes schafft.

Die Klappenfunktion selbst kann durch einen losen Abschnitt des Flächenelements ausgebildet werden, der ggf. mit verstärkten Rändern und/oder Streifenelementen zwecks Aussteifung der flächigen Erstreckung der Kappe im Obertrum aufliegt und im Untertrum öffnet. Ein solcher Abschnitt kann bereichsweise mit angrenzenden Bereichen des Flächenelements überlappen. Die Klappe kann ebenfalls einen über ein Gelenk gelagerten Rahmen aufweisen. Das Gelenk kann beispielsweise durch Schlaufen ausgebildet sein, die durch ein Umschlagen des Materials des Flächenelements erzeugt werden. Eine Reinigungsklappe kann alternativ auch in Umlaufrichtung versetzt vom Schlossbereich ausgebildet sein.

Die eingangs gestellte Aufgabe wird ebenfalls durch eine landwirtschaftliche Arbeitsmaschine gelöst, insbesondere durch eine Erntemaschine für vorzugsweise Hackfrüchte, welche mit einem solchen Förderband ausgestattet ist. Insbesondere handelt es sich um ein Förderband für den Abtransport von ungewünschten Beimengen, die während eines Förderprozesses des aufgenommenen Erntegutes durch die Arbeitsmaschine vom gewünschten Erntegut weggefördert wird. Hierbei handelt es sich insbesondere um Steine, Erdklumpen (Kluten) oder Gemische hiervon.

Die Endlosträger sind in Varianten, in denen das Flächenelement nicht einstückig mit diesen ausgebildet ist, als separate Gurte ausgebildet, an denen das Flächenelement befestigt ist. Insbesondere handelt es sich bei den Endlosträgern um Zahnriemen bzw. Zahngurte, die auf entsprechenden Antriebsrollen in einer landwirtschaftlichen Arbeitsmaschine angetrieben werden können. Solche Riemen oder Gurte werden aus einem Endlosgurtmaterial beispielsweise mit einer Gewebeschicht, die von Deckmaterial bedeckt ist, hergestellt und an den beiden Enden mit einem Gurt- oder Riemenschloss zu einem Endlosträger verbunden.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand in einer Prinzipdarstellung,
- Fig. 2: den erfindungsgemäßen Gegenstand nach Fig. 9 in einer Teilansicht,
- Fig. 3: einen Detailausschnitt des Gegenstands nach Fig. 2,
- Fig. 4: eine weitere Teilansicht des erfindungsgemäßen Gegenstands nach Fig. 2,
- Fig. 5: eine weitere Detailansicht des erfindungsgemäßen Gegenstands nach Fig. 2,
- Fig. 6: eine weitere Detailansicht des erfindungsgemäßen Gegenstands nach Fig. 2,
- Fig. 7: eine Ansicht entlang A-A nach Fig. 6,
- Fig. 8: eine Ansicht entlang B-B nach Fig. 6,
- Fig. 9: eine Seitenansicht eines weiteren erfindungsgemäßen Gegenstands.

Einzelne technische Merkmale der nach beschriebenen Ausführungsbeispiele können auch in Kombination mit vorbeschriebenen Ausführungsbeispielen sowie den Merkmalen eines der unabhängigen Ansprüche und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

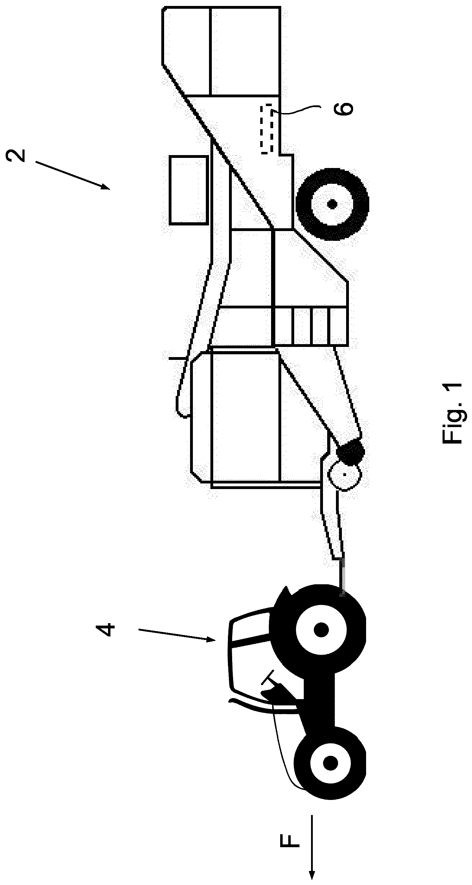

Eine erfindungsgemäße landwirtschaftliche Arbeitsmaschine 2 ist gemäß Fig. 1 als eine von einem Schlepper 4 gezogene Hackfruchterntemaschine ausgebildet. Die in diesem Fall als Kartoffelroder ausgebildete Erntemaschine weist zum Abtransport von mit dem Erntegut aufgenommenen Steinen ein erfindungsgemäßes Förderband 6 auf, welches quer zur Fahrtrichtung F des Schleppers 4 verlaufend etwaige aus der Erntegutmasse herausgesiebte bzw. -gefilterte Steine seitlich zur Erntemaschine herausfördert.

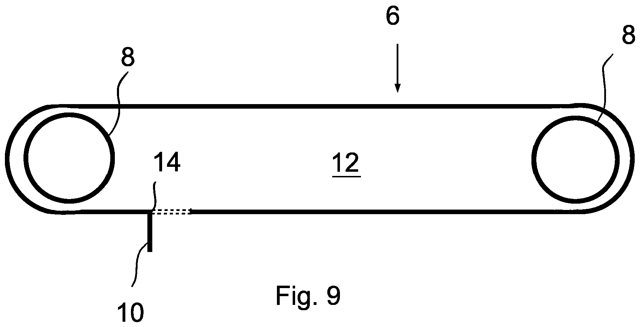

Eine Ausbildung eines solches erfindungsgemäßen Förderbands 6 ist ein gemäß Fig. 9 umlaufendes und über zwei Umlenkrollen 8 angetriebenes Förderband, welches eine Reinigungsklappe 10 aufweist, die im Untertrum gemäß Fig. 9 schwerkraftbedingt aufklappt und eine Reinigungsöffnung freigibt, durch die etwaiges im Zwischenbereich 12 zwischen Obertrum und Untertrum angesammeltes Material entfernt werden kann.

Eine solche Reinigungsklappe 10 weist beispielhaft einen Knickbereich 14 auf, der über ein Gelenk und/oder durch das Material eines Flächenelements 18 ausgebildet wird. Beispielsweise fällt die Klappe schwerkraftbedingt aufgrund des Gewichts und der Flexibilität des Materials des Flächenelements 18 auf, so dass Steine aus dem Zwischenraum 12 herausfallen können. Die Klappe sich schwerkraftbedingt wieder nach Umlauf um eine Umlenkrolle 8.

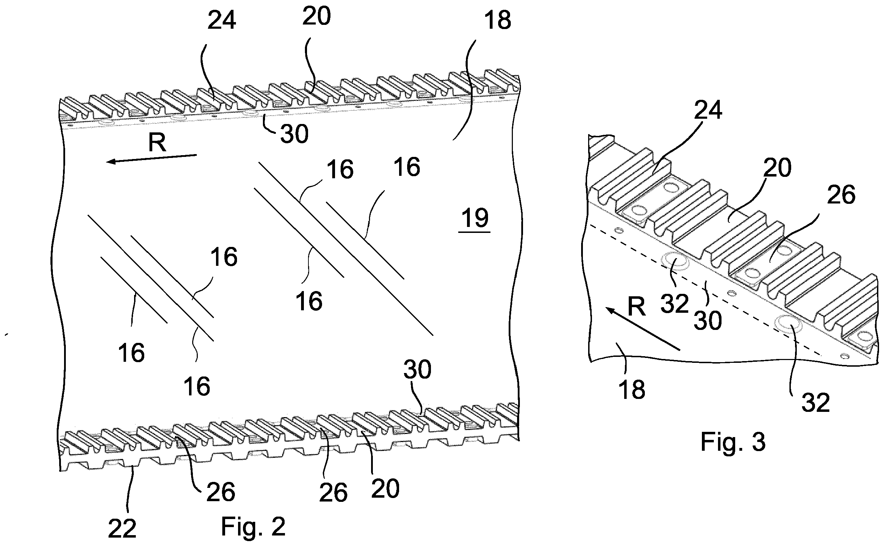

Das erfindungsgemäße Förderband ist in einer perspektivischen Ansicht auf die Oberseite des Förderbandes 6, die im Obertrum gemäß Fig. 9 in der Figurendarstellung nach oben zeigt und im Untertrum gemäß Fig. 9 nach unten zeigt, in Fig. 2 dargestellt. Hilfslinien 16 kennzeichnen die flächige Erstreckung des vorliegend als Kunststofftuch ausgebildeten Flächenelements 18 mit dessen Oberseite 19.

Das Flächenelement 18 ist zwischen zwei Endlosträgern 20 aufgespannt, die auf der Unterseite keilförmige Verdickungen 22 aufweisen, die mit entsprechenden Erhebungen eines Antriebsrades korrespondieren. Auf der Oberseite eines jeweiligen Endlosträgers 20 sind Stege 24 vorhanden, zwischen denen Befestigungsplatten 26 angeordnet sind, welche zur Befestigung von als Querstäbe ausgebildeten Querelementen 28 dienen. Die Stege 24 dienen insbesondere zum Schutz etwaiger Umlenkrollen vor den Befestigungsplatten 26 (Fig. 2 und 3).

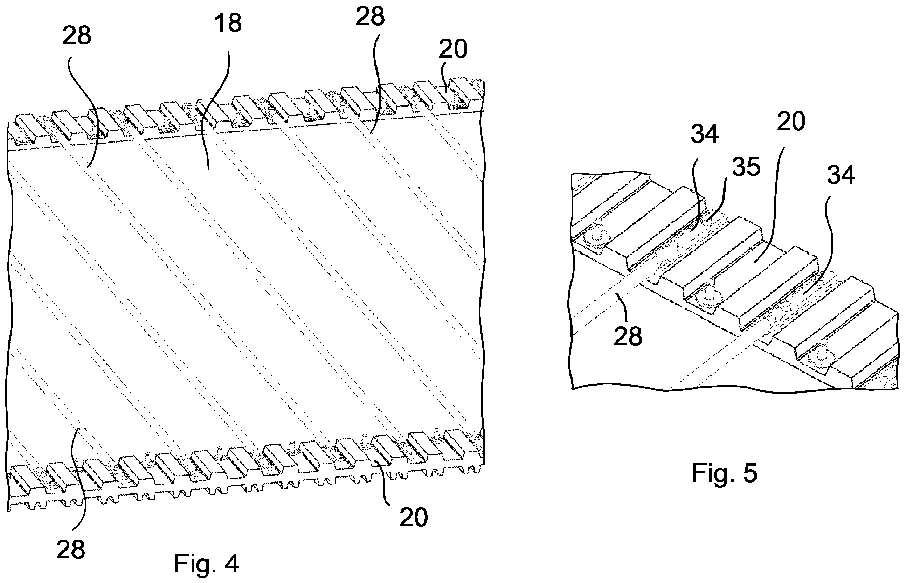

Ein Pfeil R kennzeichnet die Förderrichtung des Förderbandes (Fig. 2 und 3). In Förderrichtung R betrachtet weist das Flächenelement 18 seitliche Enden in Form von Rändern 30 auf, die auf einem stegfreien und flachen Absatz des jeweiligen Endlosträgers befestigt sind. An diesen Randabschnitten 30 ist das Flächenelement jeweils mit einer Vielzahl von Befestigungsmitteln 32, vorliegend Blindniete, unmittelbar an dem Endlosträger 20 festgelegt. Auf einer Unterseite des jeweiligen Endlosträgers, die in den Fig. 4 und 5 in einer perspektivischen Ansicht dargestellt ist, verlaufen die Querelemente 28, die in ihren abgeflachten Enden 34 in Fahrtrichtung R betrachtet jeweils links und rechts am jeweiligen Endlosträger 20 festgelegt sind. Die Festlegung der Querelemente 28 kann beispielsweise mittels jeweils zweier Senkniete 35 erfolgen, die an dem jeweiligen Endbereich 34 eines Querelements 28 mit einer jeweiligen zugehörigen Befestigungsplatte 26 am Querträger 20 festliegen.

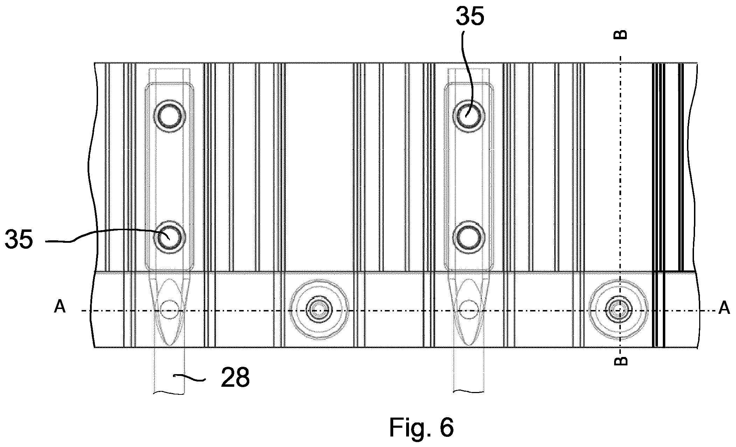

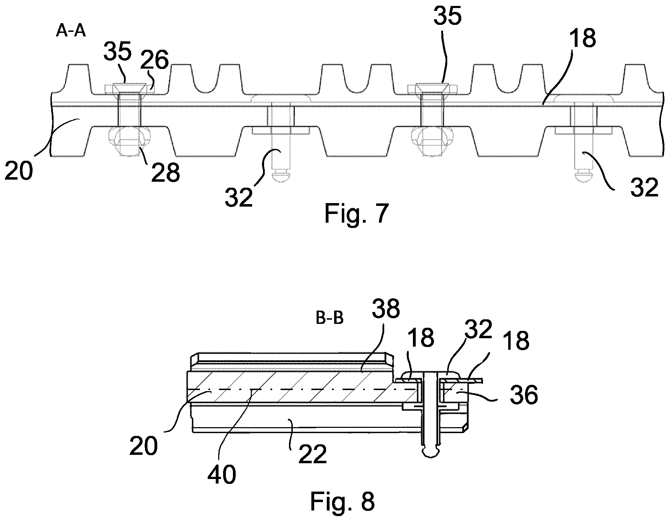

Die Schnittlinien A-A bzw. B-B gemäß Fig. 6 zeigen den Verlauf der Schnitte nach den Fig. 7 und 8. Es versteht sich, dass die Befestigungsmittel 32 in Form von Blindniete nur exemplarisch dargestellt sind und in der Befestigungsposition eine typische Blindnietform annehmen. Insbesondere ist das Querelement mittels Senkniete 36 befestigt, welches die Befestigungsplatten 26 und das Querelement 28 gegen den Endlosträger 20 klemmt. Die Befestigung des Flächenelements 18 erfolgt unabhängig von einer Befestigung des jeweiligen Querelements 28 an dem jeweiligen Endlosträger 20.

Das Flächenelement 18 ist auf einem Absatz 36 befestigt, der beispielsweise durch Abfräsen von Obermaterial eines Endlosträgers 20 entstanden sein oder direkt in dieser Form hergestellt sein kann und dessen Oberseite in der in Fig. 8 gezeigten Ansicht unterhalb einer Oberseite 38 des angrenzenden Bereichs des Endlosträgers 20 liegt.

Die Höhe des Absatzes ist so gewählt, dass der zusätzliche Aufbau durch das Flächenelement 18 und einen Kopf des Befestigungsmittels 32 maximal so hoch ist wie die Kante, die zur Oberseite 38 führt. Die Oberseite 38, auf der etwaige Umlenkrollen ablaufen, liegt somit auf gleicher oder größerer Höhe als die Oberseite des Absatzes 36. Einerseits wird hierdurch erreicht, dass besagte Umlenkrollen durch den Kopf des Befestigungsmittels 32 nicht gestört werden, andererseits ist hierüber das Flächenelement 18 dichter an einer strichpunktiert dargestellten neutralen Faser 40 angeordnet, so dass die Dehnung des Flächenelements 18 während des Umlaufs minimiert wird. Der Abstand des Flächenelements 18 zur neutralen Faser 40 beträgt weniger als 1 cm.

## Patentansprüche

1. Förderband für eine landwirtschaftliche Arbeitsmaschine (2), insbesondere eine Erntemaschine, mit zumindest zwei Endlosträgern (20), die über mehrere quer zur Längserstreckung des Förderbands (6) und der im Betrieb vorhandenen Förderrichtung (R) verlaufende Querelemente miteinander verbunden und auf Abstand zueinander gehalten sind, wobei die Querelemente (28) an ihren entgegengesetzten Enden (34) jeweils an unterschiedlichen Endlosträgern (20) befestigt sind, sowie mit wenigstens einem flexiblen Flächenelement (18), dessen Oberseite (19) zum Transport von landwirtschaftlichem Gut vorgesehen ist und das in einer Draufsicht auf das Förderband (6) eine Fläche zwischen den Endlosträgern (20) überdeckt, **dadurch gekennzeichnet, dass** das Flächenelement (18) in Förderrichtung (R) betrachtet an seinen beiden entgegengesetzten seitlichen Enden jeweils direkt mit unterschiedlichen Endlosträgern (20) verbunden ist.

2. Förderband nach einem der vorherigen Ansprüche, **dadurch gekennzeichnet, dass** das Flächenelement (18) direkt an den Endlosträgern (20) befestigt ist.

3. Förderband nach Anspruch 2, **dadurch gekennzeichnet, dass** das Flächenelement (18) unter Verzicht auf eine zumindest teilweise, insbesondere vollständige Festlegung an den Querelementen (28) an den Endlosträgern befestigt.

4. Förderband nach einem der vorherigen Ansprüche, **dadurch gekennzeichnet, dass** das Flächenelement (18) in Längsrichtung betrachtet breiter als der Zwischenraum zwischen den Endlosträgern (20) ist.

5. Förderband nach einem der vorherigen Ansprüche, **dadurch gekennzeichnet, dass** das Flächenelement (18) in Längsrichtung betrachtet an einem jeweiligen insbesondere stegfreien Absatz des Endlosträgers (20) festgelegt ist.

6. Förderband nach einem der vorherigen Ansprüche, **dadurch gekennzeichnet, dass** das Flächenelement (18) in Längsrichtung und im Querschnitt betrachtet weniger als 1 cm von der neutralen Faser (40) der Endlosträger (20) beabstandet ist.

7. Förderband nach einem der vorherigen Ansprüche, **dadurch gekennzeichnet, dass** die Querelemente (28) als Stäbe insbesondere mit abgeflachten Enden (34) ausgebildet ist.

8. Förderband nach einem der vorherigen Ansprüche, **dadurch gekennzeichnet, dass** das Flächenelement (18) auf einer Oberseite des jeweiligen Endlosträgers (20) festgelegt ist.

9. Förderband nach einem der vorherigen Ansprüche, **dadurch gekennzeichnet, dass** die Querelemente (28) auf einer Unterseite des jeweiligen Endlosträgers (20) festgelegt sind.

10. Förderband nach einem der vorherigen Ansprüche, **dadurch gekennzeichnet, dass** Flächenelement (18) im Obertrum auf den Querelementen (28) aufliegt.

11. Förderband nach einem der vorherigen Ansprüche, **dadurch gekennzeichnet, dass** das Flächenelement (18) als ein- oder mehrschichtiges Tuch ausgebildet ist, insbesondere wobei eine Schicht durch eine Gewebeeinlage ausgebildet ist.

12. Förderband nach einem der vorherigen Ansprüche, **dadurch gekennzeichnet, dass** ungeachtet einer ansonsten in Umlaufrichtung durch das Flächenelement (18) ausgebildeten, geschlossenen Förderfläche in einem Schlossbereich der Endlosträger (20) eine Reinigungsklappe (10) angeordnet ist.

13. Landwirtschaftliche Arbeitsmaschine, insbesondere Erntemaschine, **gekennzeichnet durch** ein Förderband (6) nach einem der vorherigen Ansprüche.
